# EUROPEAN PATENT APPLICATION

(11) **EP 1 098 503 A2**
(43) Date of publication of application: **09.05.2001**
(21) Application number: 00440278.0
(22) Date of filing: 18.10.2000
(51) Int. Cl.: H04M 3/42, H04Q 3/00

(54) **Recording and transmitting a voice or text message identifying a caller to a called subscriber**

(30) Priority: 05.11.1999 DE 19953221
(71) Applicant: ALCATEL, 75008 Paris (FR)
(72) Inventor: Brogné, Nicolas, 78530 Buc (FR)
(74) Representative: Rausch, Gabriele, Dr.

(57) **Abstract**

The invention concerns a process for transmitting an individual message identifying a caller to a called subscriber in a telecommunication network (NW), as well as a network facility (SCP) and a switching centre for this process. Here a connection (VA, VSC) is established from a terminal (TERA) of a first subscriber to a network facility (SCP) of the telecommunication network (NW). The terminal (TERA) then records at least one first message that is designed to identify the first subscriber individually during a call and transmits this message to the network facility (SCP), which then stores the message.

If a connection (VA, V12, VB) is then established from the terminal (TERA) of the first subscriber to a terminal (TERB) of a second subscriber via the telecommunication network (NW), the stored message is transmitted to the terminal (TERB) of the second subscriber.

## Description

The invention concerns a process according to the preamble of Claim 1, as well as a network facility according to the preamble of Claim 8, and a switching centre according to the preamble of Claim 10.

If a calling subscriber calls a called subscriber from his terminal via a telecommunication network, the called subscriber can usually only know from a bell signal that he has to accept a call on a simple, analogue terminal. In Integrated Services Digital Networks (ISDN) for example, it is possible for the directory number of the calling subscriber to be transmitted by the telecommunication network to the terminal of the called subscriber and then indicated by the terminal on a display, provided that it is an ISDN terminal. Such a service is termed "Calling Line Identification Presentation", or "CLIP" for short. The CLIP service is also available in mobile radio networks. The called subscriber can identify the calling subscriber by means of the displayed directory number and decide, for example, whether or not he accepts the call.

In a variant of the CLIP service, the directory number is not transmitted as a text message to the terminal of the called subscriber, but as a voice message. Such a process is disclosed by European patent application EP 0 821 511 A2, for example. Here a directory number or the name of a caller to be announced at the terminal of the called subscriber is first read from a database as a text message and then converted with the aid of a speech processor into a voice message and transmitted to the terminal of the called subscriber. The called subscriber can then decide whether or not he accepts the call by pressing a key on his terminal.

Both in the text variant and in the speech variant of the CLIP service, however, by preference only the directory number of the calling subscriber is specified. But if the called subscriber does not know the displayed or announced directory number he cannot determine who is calling. A directory number alone is therefore inconvenient to a called subscriber and in the case of a voice announcement also time-consuming. Even if in the case of the voice announcement the name of the calling party is announced instead of the directory number, this is a very impersonal matter. With friends or family, instead of a calling subscriber's forename and last name a called subscriber will prefer, for example, to hear or see in the telephone display only his or her first name or even their nickname.

One aim of individual messages identifying a caller with the aid of a called party's terminal, that is to say the call destination, is disclosed in PCT application WO 98/51056. In this case the messages identifying a caller are stored along with the directory numbers of the respective caller in a memory of the respective called party's terminal. If a call then arrives at the terminal along with the directory number of the calling subscriber, the called party's terminal determines from the memory the message associated with this directory number and outputs the message. A particular drawback here is that the called party's terminal has to be specially designed for the storage and manipulation of the messages. Moreover, the messages have to be stored in every potential called party's terminal. If no message is stored in a terminal, the caller cannot be individually identified therein.

The object of the invention is therefore to supply in a simple and efficient manner a called subscriber with an individual message identifying a caller.

This objective is achieved by a process according to the technical doctrine of Claim 1, a network facility according to the technical doctrine of Claim 8, as well as a switching centre according to the technical doctrine of Claim 10. Further advantageous effects of the invention are revealed in the dependent claims and the description.

According to the invention, first of all an individual message from a terminal, for example a telephone, of a first subscriber who wishes to identify himself individually during calls with the aid of the message, is transmitted to a network facility of a telecommunication network and is stored in said network facility. This network facility can be, for example, a switching centre or a so-called service control point within a so-called intelligent network which supplies its services to various service switching points (SSPs). If the first subscriber then establishes a connection from his terminal to a second subscriber's terminal via the telecommunication network, the network facility transmits this individual message to the second subscriber's terminal which then outputs the message, for example in the form of an indication on a display or in the form of a voice announcement. Both the terminal of the calling, first subscriber and the terminal of the called, second subscriber can be conventional existing terminals since the message can be generated at any terminal and received by any terminal.

On the one hand, after storage in the network facility, from this point on the individual message can at every call which the first subscriber makes be transmitted by the network facility to the terminal of the second subscriber. On the other hand, however, in an advantageous development of the invention it is also possible for the network facility to be instructed to transmit the message either individually per call or for a series of calls by switching the transmission to "active" or "inactive".

In a further variant of the invention, a directory number or a list of directory numbers is stored in the network facility in addition to the message. When a call is routed from the first subscriber's terminal to a directory number, the network facility checks whether the directory number dialled at the terminal coincides with a directory number associated with the message. If this is the case, the network facility transmits the message to the called party's terminal. This then ensures that only the call destinations personally selected by the first subscriber receive the individual message.

The first subscriber can also store several different messages, each with different directory numbers, in the network facility. The network facility can then determine the respective matching message and send it to the called party's terminal with the aid of the respective directory number dialled by the first subscriber during a call.

On the one hand, as illustrated above, if the first subscriber has stored several messages at the network facility, the network facility can establish this itself. On the other hand, the subscriber can also send an instruction to the network facility from his terminal to send a specific message to the respective call destination. For example, after a "1" is dialled at the terminal, the network facility sends a message "1" to the call destination and a message "2" after a "2" is dialled. The subscriber thus has a very simple and convenient option for preparing messages not only individually but also applying them individually.

Depending on the respective subscriber's application and preference, the subscriber can determine whether his respective individual identifying message is a text message or a voice message. Text messages in particular can be transmitted very advantageously to the called subscriber on a service channel of the telecommunication network, for example on a D channel of an integrated services digital network (ISDN) independently of the actual speech transmission and therefore without interfering with the latter.

The invention and its advantages are illustrated below by means of an exemplary embodiment and with the aid of the drawings, of which:
- Figure 1: shows an arrangement for implementing the process according to the invention, with a switching centre SW1 according to the invention, a network facility SCP according to the invention, as well as terminals TERA, TERB and TERC, and
- Figure 2: shows a flowchart for illustrating the process according to the invention.

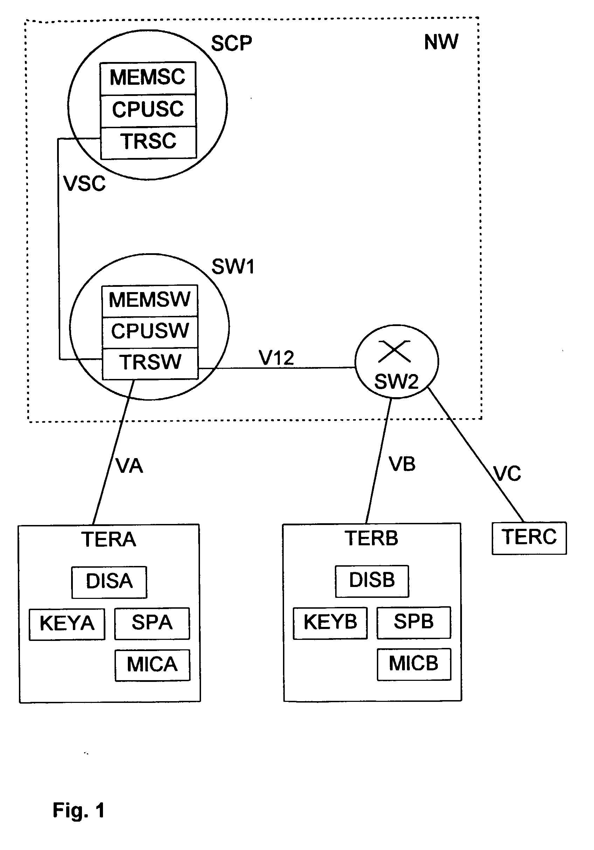

Figure 1 shows a very schematic arrangement for transmitting an individual message identifying a caller to a called subscriber. Either a terminal TERB or a terminal TERC are to be called by a terminal TERA via a telecommunication network NW. The terminals TERA, TERB and TERC can be telephones, mobile radio terminals or personal computers designed for voice communication, for example. The telecommunication network NW can be a telephone network, for example an ISDN or a mobile radio network. However, the telecommunication network can also be the Internet via which voice communication can be carried out. Such voice communication is also termed "voice over Internet protocol (VolP). The telecommunication network NW contains, for example, other facilities not shown in Figure 1, a switching centre SW1, as well as a switching centre SW2. A network facility SCP, in which individual messages identifying a caller can be stored, is also illustrated in Figure 1. The switching centre SW1 is connected to the network facility SCP via the connection VSC. In the example of Figure 1, the switching centre SW1 is a so-called service switching point of a so-called intelligent network, whereas the network facility SCP is a so-called service control node of an intelligent network. Service switching centres and service control nodes are also termed service switching points (SSP) and service control points (SCP), respectively. The switching centre has transmitting and receiving means TRSW, control means CPUSW and memory means MEMSW. The switching centre SW1 can establish connections with the transmitting and receiving means TRSW. The control means CPUSW control the operations of the switching centre SW1. The control means CPUSW can be a processor or even a cluster of processors. The switching centre SW1 can store data in the memory means MEMSW. Program code for the control means CPUSW can also be stored in the memory means MEMSW. The switching centre SW1 also has further means, not shown in Figure 1, for example a switching network, as well as internal tie lines. The network facility SCP has connection means TRSC, for example transmitting and receiving modules, as well as control means CPUSC and memory means MEMSC. The control means CPUSC can also be a processor or a group of processors. The memory means MEMSC can for example be so-called RAM modules or hard disc drives. The network facility SCP can be a server, for example, that runs on a UNIX or Windows-NT operating system. The network facility SCP can also have other means, not shown in Figure 1, for example a keypad, a monitor and an interface to a network management system which monitors and controls the functions of the telecommunication network NW.

The terminals TERA and TERB each have a keypad KEYA and KEYB, respectively, a loudspeaker SPA and SPB, respectively, a microphone MICA and MICB, respectively, as well as a display DISA and DISB, respectively, for outputting information. The display DISA or DISB can, for example, be a monitor or a liquid crystal display (LCD). The terminals TERA and TERB further contain internal means, not shown in Figure 1, such as tie lines between the aforesaid modules, for example. For the sake of clarity the modules of the terminal TERC are not shown in detail.

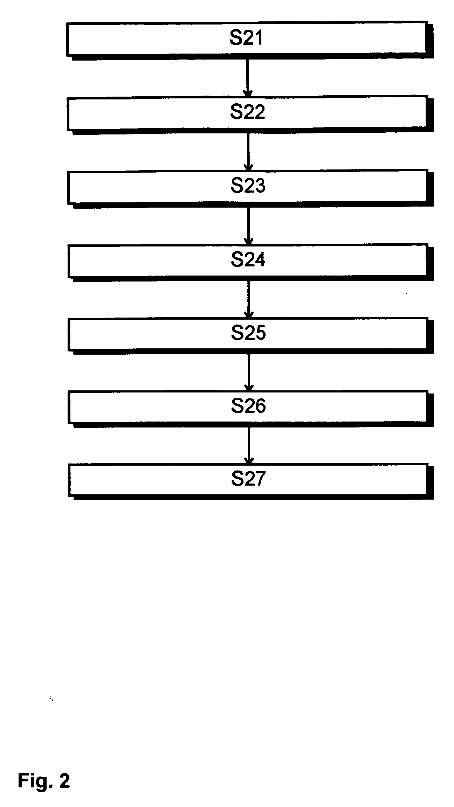

The process according to the invention is illustrated below by means of the arrangement shown in Figure 1 and with the aid of the flowchart shown in Figure 2. An operator of the terminal TERA, abbreviated in the following text to subscriber A, wishes for a specific message that identifies him personally and individually to be transmitted during calls that he makes in future. For this, in a step S21, subscriber A inputs a service code via the keypad KEYA on the terminal TERA. Following this, in a step S22, the terminal TERA establishes a connection to the switching centre SW1. The switching centre SW1 knows from this service code that subscriber A wishes to store a message that personally identifies him. However, it is also possible for the switching centre SW1 to evaluate the service code so that, on the basis of the initial receipt of the service code, the switching centre SW1 on its own, from that moment on, includes the network control facility SCP in the following process, described below in greater detail, for transmitting an individual message identifying subscriber A, whereby the switching centre SW1 sets a marker in the memory means MEMSW to the effect that subscriber A has requested this service. On receipt of the service code, the switching centre SW1 sends a service message to the network facility SCP, in which the switching centre SW1 asks the network facility SCP for further instructions regarding the handling of this service. The network control facility SCP replies to the switching centre SW1 on the service message with an instruction service message via the connection VSC, which is routed, for example, via one channel of the No. 7 common channel signalling system. Such an instruction service message or a series of instruction service messages can mean, for example, that the switching centre SW1 is sending a request to the terminal TERA by which subscriber A is requested to input his individual message at the terminal TERA. However, it is also possible for subscriber A to enter his message at the terminal immediately after inputting the service code without a prior request. This message is intercepted by the terminal TERA in a step S23 and is sent to the switching centre SW1 via the connection VA. In a step S24, the switching centre SW1 then sends the message to the network facility SCP, which then, in a step S25, stores the message in its memory MEMSC. There the individual message remains available for further calls between subscriber A and other subscribers.

If subscriber A wishes via his terminal TERA to reach a subscriber B via his terminal TERB, in a step S26 subscriber A enters the directory number of the terminal TERB. Thereupon the terminal TERA establishes a connection VA to the switching centre SW1. The switching centre SW1 then establishes the connection V12, which can be routed via other facilities, not shown in Figure 1, of the telecommunication network NW to the switching centre SW2, which makes the overall connection between terminal TERA and terminal TERB via a connection VB of a subscriber line. To more accurately identify subscriber A at subscriber B, the switching centre SW1 then finally sends the message stored by subscriber A to the terminal TERB. To do this, the switching centre SW1 interrogates the message stored at the network facility SCP, for example by giving the directory number of the terminal TERA to the network facility SCP. The latter then responds in a service message with the stored message, which is then sent by the switching centre SW1 via the connection V12 to the switching centre SW2 and thence via the connection VB to the terminal TERB.

The switching centre SW1 can forward the message individually identifying subscriber A either at each call leaving the terminal TERA, or it is also possible for this service to be individually activated or de-activated by subscriber A. To do this, subscriber A enters an activation code via the keypad KEYA, which is then sent by the terminal TERA to the switching centre SW1 via the connection VA. The switching centre SW1 then sends this activation message to the network facility SCP in the form of a service message. The network facility SCP then stores this activation code in its memory MEMSC.

If subscriber A now sends a call request from his terminal TERA to the switching centre SW1, the switching centre SW1 first asks the service controller SCP whether or not the service according to the invention is activated. If the service is activated, the network facility SCP sends the individual message to the switching centre SW1, so that the latter can then forward the message to the switching centre SW2 and on to the terminal TERB.

It is also possible for subscriber A to first enter his call request to subscriber B at the terminal TERA and immediately afterwards activate the individual message service, for example by the subscriber inputting a further code number at the keypad KEYA. With this additional code number the switching centre SW1 can then see that subscriber A has activated the individual message service for the relevant call request.

In a variant of the invention, which is particularly efficient and convenient for subscriber A, subscriber A can not only store his message identifying him individually in the network facility SCP, but also add to the message one or more directory numbers with which this message is intended to be sent. At each call to be made from the terminal TERA, the switching centre SW1 then checks whether the directory number entered at the terminal coincides with one of the directory numbers stored in the network facility SCP in conjunction with the message. To do this, the switching centre SW1 sends the directory number of the terminal TERA via the connection VSC to the network facility SCP, which then, in the case of coincidence, routes the message identifying the subscriber back to the switching centre SW1.

It is also possible for not only a single message identifying subscriber A to be stored in the network facility SCP, but also for several messages from subscriber A to be stored in the network facility SCP. These messages can then be called up by subscriber A according to call destination. If subscriber A calls subscriber B, for example, a message A, for instance, should be forwarded to the terminal TERB. However, if subscriber A wishes to make a call to the terminal TERC, then a message C should be forwarded to the terminal TERC, for example. Subscriber A can call up these messages at the network facility SCP, for example by pressing various keys on the keypad KEYA.

It is also possible, however, for the respective directory numbers of terminal TERB or TERC, respectively, to be stored in the network facility SCP with each of the various messages, for example, message B and message C. For example, if subscriber A then enters the directory number of the terminal TERC at his terminal, the switching centre SW1 sends this directory number to the network facility SCP. The latter then determines by means of the directory number of the terminal TERC that the message C is to be forwarded. The network facility SCP therefore sends the message C to the switching centre SW1, which then forwards the message to the terminal TERC via the switching centre SW2 and the connection VC.

In a particularly simple case, the message individually identifying subscriber A can be a voice message which subscriber A inputs via the microphone MICA and which is then forwarded by the switching centre SW1 to the network facility SCP. The network facility SCP can then store this message directly as a voice message in the form of a telephone answering function, as well as a text message in a speech-to-text conversion. It is also possible for subscriber A to enter a text message directly via the keypad KEYA, which can then be directly stored by the network facility SCP in this text form. In both cases the terminal TERA needs no special devices whatsoever to provide the service according to the invention.

If subscriber A's terminal TERA or an alternative terminal, not shown in Figure 1, allows access to the Internet, subscriber A can configure his individual messages himself on a website that the network facility SCP offers in a variant, not shown in Figure 1. In order to transmit the message from the terminal TERA to the network facility SCP, the connection VSC is then routed via the Internet. However, in this variant too, for communication between the switching centre SW1 and the network facility SCP, the connection VSC is routed via a signalling channel or another reliable transmission path guaranteeing a high data transmission rate.

The messages input by subscriber A can be retrieved by the switching centre SW1 from the network facility SCP either in the form of a voice message or in the form of a text message. In the case of a text message in particular, it is advantageous if such a text message is transmitted not by means of in-band signalling but on a service channel of the telecommunication network NW. In this case the switching centre SW1 can forward the text message to the switching centre SW2 on one channel of the No. 7 common channel signalling system. In turn, the switching centre SW2 can use one D channel of an ISDN or one SMS (short message system) channel, for example. In this case too, the receiving terminal - terminal TERB or terminal TERC in the example of Figure 1 - needs no special facilities whatsoever. For example, an ISDN terminal or a mobile radio terminal usually has a display, represented in Figure 1 in the form of the display DISB. If the message is forwarded not as a text message but as a voice message, the voice message can be easily output via the loudspeaker SPB of the terminal TERB.

As illustrated in Figure 1, it is certainly possible for the process according to the invention to be realised by the combination of a switching centre and a network facility - the switching centre SW1 and the network facility SCP in Figure 1. The functions of the network facility SCP can, however, also be directly achieved by the switching centre SW1 as well. In this case the control means CPUSW then fulfills the functions of the control means CPUSC and, moreover, the messages stored in the memory MEMSC are then stored in the memory MEMSW. Such a combination device comprising switching centre SW1 and network facility SCP can also be termed an SSCP (service switching and control point). Apart from the switching centre SW1, the network facility SCP can also serve other switching centres of a similar function, which are not shown in Figure 1. Furthermore, the telecommunication network NW can include additional switching centres and transmission systems and tie lines, which are not illustrated in Figure 1. The telecommunication network NW can also be a network that incorporates a line sub-network and a fixed network, for example.

A proprietary combination of the respective sub-functions of the switching centre SW1 and the network facility SCP, which does not meet the requirements of an intelligent network, can also be specified, particularly if the switching centre SW1 and the network facility SCP are for example interconnected via a local area network (LAN) or even combined in one combination unit.

If the telecommunication network NW is the Internet, the switching centres SW1 and SW2 are analogous to the illustrated example of an intelligent network, for example so-called gatekeepers or call servers, which facilitate functions for speech communication between (Internet) terminals with the aid of the H.323 protocol, for example. The network facility SCP is then a service server assigned to such gatekeepers, unless the services of the network facility SCP are already provided by the gatekeepers themselves.

## Claims

1. Process for transmitting an individual message identifying a caller to a called subscriber in a telecommunication network (NW), comprising the steps of:
- setting up a connection (VA, VSC) from a terminal (TERA) of a first subscriber to a network facility (SCP) of the telecommunication network (NW);
- recording at least one first message in the terminal (TERA) of the first subscriber, the message being suited to identifying the first subscriber in the event of a call;
- transmitting the message from the terminal (TERA) of the first subscriber to the network facility;
- storing the message in the network facility;
- setting up a connection (VA, V12, VB) from the terminal (TERA) of the first subscriber to a terminal (TERB) of a second subscriber via the telecommunication network (NW);
- transmitting the stored message to the terminal (TERB) of the second subscriber.

2. Process according to Claim 1, **characterised in that** the terminal (TERA) of the first subscriber of the network facility (SCP) sends an instruction to transmit the stored first message to the terminal (TERB) of the second subscriber.

3. Process according to Claim 1, **characterised in that** at least one first directory number is stored in the network facility (SCP) at least together with the first message, and that the network facility (SCP) sends the message to the terminal (TERB) of the second subscriber only when the directory number stored with the first message corresponds to the directory number of the second subscriber.

4. Process according to Claim 1, **characterised in that** the terminal (TERA) of the first subscriber of the network facility (SCP) sends a selection instruction to transmit either the stored first message or another alternative stored message to the terminal (TERB) of the second subscriber if several messages identifying the first subscriber in the event of a call are stored in the network facility (SCP).

5. Process according to Claim 1, **characterised in that** the message is transmitted from the terminal (TERA) to the network facility (SCP) over the Internet.

6. Process according to Claim 1, **characterised in that** the message is a text message or a voice message.

7. Process according to Claim 1, **characterised in that** the message is transmitted from the network facility (SCP) to the terminal (TERB) of the second subscriber on a service channel of the telecommunication network (NW).

8. Network facility (SCP) for transmitting an individual message identifying a caller to a called subscriber in a telecommunication network (NW), **characterised in that** the network facility (SCP) has receiving means (TRSC, CPUSC) which are designed to enable the network facility (SCP) to receive from a terminal (TERA) of a first subscriber at least a first message that is suited to identifying the first subscriber in the event of a call, that the network facility (SCP) has memory means (MEMSC) which are designed to enable the network facility (SCP) to store the message, and that the network facility (SCP) has transmitting means (TRSC, CPUSC) with which the network facility (SCP) can send the stored message to the terminal (TERB) of a second subscriber when a connection (VA, V12, VB) is established from the terminal (TERA) of the first subscriber to a terminal (TERB) of a second subscriber through the telecommunication network (NW).

9. Network facility (SCP) according to Claim 8, **characterised in that** the receiving means (TRSC, CPUSC) are furthermore designed to enable the network facility (SCP) to receive an instruction sent by the terminal (TERA) of the first subscriber to transmit the stored message to the terminal (TERB) of the second subscriber, and that the network facility (SCP) has evaluation means (CPUSC) which are designed so that the network facility (SCP) sends the stored message to the terminal (TERB) of the second subscriber only when the network facility (SCP) has received said instruction.

10. Switching centre for transmitting an individual message identifying a caller to a called subscriber in a telecommunication network (NW), **characterised in that** the switching centre has receiving means (TRSW, CPUSW) which are designed to enable the switching centre to receive from a terminal (TERA) of a first subscriber at least one instruction to send a message identifying the first subscriber in the event of a call, that the switching centre has means (CPUSW) which are designed to enable the switching centre to determine the identifying message, and that the switching centre has transmitting means (TRSW, CPUSW) with which the switching centre can send the identifying message to the terminal (TERB) of a second subscriber when a connection (VA, V12, VB) is established from the terminal (TERA) of the first subscriber to a terminal (TERB) of a second subscriber through the telecommunication network (NW).
